Europäisches Patentamt

European Patent Office

Office européen des brevets

(11) Veröffentlichungsnummer: **0 141 384 B1**

## (12) EUROPÄISCHE PATENTSCHRIFT

(45) Veröffentlichungstag der Patentschrift: **15.01.92**

(51) Int. Cl.⁵: **A22B 5/00**

(21) Anmeldenummer: **84112892.9**

(22) Anmeldetag: **25.10.84**

(54) **Schlachtviehbetäubungsrestrainer.**

(30) Priorität: **26.10.83 DE 3338850**

(43) Veröffentlichungstag der Anmeldung:
**15.05.85 Patentblatt 85/20**

(45) Bekanntmachung des Hinweises auf die
Patenterteilung:
**15.01.92 Patentblatt 92/03**

(84) Benannte Vertragsstaaten:
**AT BE CH DE FR GB IT LI NL SE**

(56) Entgegenhaltungen:
**DE-A- 2 126 515**
**GB-A- 1 599 455**

(73) Patentinhaber: **Banss Maschinenfabrik GmbH
& Co. KG
Industriestrasse 4
W-3560 Biedenkopf(DE)**

(72) Erfinder: **Gerlach, Curt
Industriestrasse
W-3560 Biedenkopf(DE)**

(74) Vertreter: **Klunker, Hans-Friedrich, Dr. et al
Patentanwälte Klunker . Schmitt-Nilson .
Hirsch Winzererstrasse 106
W-8000 München 40(DE)**

Rank Xerox (UK) Business Services

# Beschreibung

Gegenstand der Erfindung ist ein Restrainer zum Halten und Weiterbewegen von Schlachttieren, insbesondere Schweinen, mit einem Paar von im Querschnitt V-förmig angeordneten, synchron bewegbaren endlosen Gummibandförderern , die an den einander zugewandten Seiten jeweils ein förderndes Trum aufweisen und die jeweils mit mindestens einem längs verlaufenden Abstützungsvorsprung an der Rückseite ausgebildet sind, und mit einer rotierbaren Antriebsrolle am Austrittsende des Restrainers sowie einer rotierbaren Umlenkrolle am Eintrittsende des Restrainers für jeden Gummibandförderer, wobei die Antriebsrollen und die Umlenkrollen zur absenkungsverhindernden Abstützung der Gummibandförderer mit mindestens einer Ringnut am Umfang versehen sind, in die der jeweilige Abstützungsvorsprung formschlüssig eingreift, dadurch gekennzeichnet, daß bei beiden Gummibandförderern des zur Betäubung von Schlachttieren vorgesehenen Restrainers jeweils zwischen der Umlenkrolle und der Antriebsrolle eine Reihe von Abstützungsrollen längs des fördernden Trums vorgesehen ist, die alle oder zum Teil mit mindestens einer Ringnut am Umfang versehen sind.

"Restrainer" ist ein auf dem Gebiet der Schlachttechnik eingebürgerter Begriff für eine Vorrichtung zum Halten und Weiterbewegen von Schlachttieren, die im wesentlichen aus einem Paar von im Querschnitt V-förmig angeordneten, bandartigen Förderern mit entsprechendem Antrieb besteht. Die Schlachttiere werden der Reihe nach dem Eingang des Restrainers zugetrieben, wobei der Boden, auf dem die Schlachttiere zum Restrainer laufen, sich im Bereich kurz hinter dem Restrainereingang absenkt. Auf diese Weise sacken die Schlachttiere in den V-förmigen Raum zwischen den beiden fördernden Trums des Restrainers und verlieren den Bodenkontakt. Die beiden Förderer klemmen die Schlachttiere nahezu unbeweglich zwischen sich ein, so daß deren Betäubung, vorzugsweise mittels durch geeignete Elektroden zugeführtem elektrischem Strom, einfach durchgeführt werden kann.

Ein Schlachtviehbetäubungsrestrainer ist aus der DE-A-2 126 515 bekannt. Bei disem Restrainer sind die Förderer aus Gliedern aufgebaut, die sich als längliche Platten quer zur Förderrichtung erstrecken und gelenkig aneinander befestigt sind. Auf der nicht mit den Schlachttieren in Kontakt kommenden Rückseite sind beide Förderer mit Rädern versehen, die auf geeigneten Schienen ablaufen und so eine absenkverhindernde Abstützung der Förderer bewirken. Am Eingang und am Ausgang des Restrainers werden die Förderer jeweils um 180 ° um Rollen umgelenkt, wobei für jeden der Förderer eine der Rollen antreibbar ist, um auf diese Weise die Förderer anzutreiben.

Bei dem bekannten Förderer wird der Aufbau aus Gliedern und die Art der Förderabstützung als nachteilig angesehen, weil die Gelenke zwischen den Gliedern und die Abstützräder störungsanfällige Schwachstellen sind und weil überdies die Abstützung konstruktiv aufwendig ist.

Aus der GB-A-1 599 455 ist ein Restrainer mit den Merkmalen des Oberbegriffs des Anspruchs 1 bekannt. Dieser bekannte Restrainer weist zwischen der Umlenkrolle und der Antriebsrolle jedes der beiden Gummibandförderer einen Gleitkasten mit einem Spalt zur Aufnahme des rückseitigen Abstützungsvorsprungs des betreffenden Gummibandförderers auf. Hieraus resultiert eine relativ hohe Reibung, insbesondere angesichts der erheblichen, durch die zwischen den beiden Gummibandförderern eingeklemmten Schlachttiere verurschten Anpreßkräfte. Außerdem ist die Synchronisierung der beiden Gummibandförderer erschwert, da diese Anpreßkräfte links und rechts nicht identisch sind.

Der erfindungsgemäße Restrainer der durch die Merkmale des Kennzeichens des Anspruchs 1 gekennzeichnet ist, ist besonders einfach aufgebaut und im rauhen Schlachtbetrieb besonders wenig störungsanfällig.

Die beiden Gummibandförderer, die vorzugsweise in an sich bekannter Weise dauerhaft jeweils zu einem Endlosförderer geschlossen sind, weisen keinen gliederartigen Aufbau mit Gelenken auf und sind daher schon aus diesem Grunde nicht verschleißanfällig. Die absenkverhindernde Abstützung ist durch die längs verlaufenden Abstützungsvorsprünge, die mit entsprechenden Ringnuten am Umfang von mit den Förderern zusammenwirkenden Rollen formschlüssig zusammenwirken, konstruktiv besonders einfach undnicht störungsanfällig gelöst. Außerdem erreicht man den Vorteil, daß die Schlachttiere nicht zwischen den Gliedern eines Gliederbandes eingeklemmt werden können, wie man es bisher insbesondere an der Eingangsseite von Restrainern, wo sich ja die Gliederzwischenräume wegen des Übergangs von der Umlenkrolle zum geraden Verlauf schließen, häufig beobachtet hat. Mit solchen Einklemmungen waren auch hohe, auf die bekannten Förderer kommende Kräfte verbunden, die zuweilen zur Zerstörung des Restrainers geführt haben.

Bei einem Restrainer kommen erhebliche Querkräfte aus dem Gewicht der Schlachttiere auf die Förderer . Bei der erfindungsgemäßen Konstruktion hat man für eine sowohl technisch einfache und störungsunempfindliche als auch die beschriebenen Querkräfte auf besonders günstige Weise ableitende, absenkverhindernde Abstützung gesorgt.

Über die Breite jedes Förderers sind an seiner Rückseite einer oder mehrere, vorzugsweise zwei, längs verlaufende Abstützungsvorsprünge vorgesehen, wobei im Fall nur eines einzigen Abstützungsvorsprungs dieser vorzugsweise mehr im oberen Bereich des Gummibandförderers vorgesehen ist. Es müssen nicht alle mit dem jeweiligen Förderer in Kontakt stehenden Rollen mit einer oder mehreren, entsprechenden Ringnuten ausgestattet sein; vielmehr richtet sich die Zahl der Rollen mit Ringnuten nach der Größe der zu erwartenden absenkverhindernden Abstützungskräfte. Vorzugsweise sind jedoch alle mit der Rückseite des jeweiligen Förderers in Kontakt stehenden Rollen mit der entsprechenden Anzahl von Ringnuten ausgestattet.

Vorzugsweise sind der oder die Abstützungsvorsprünge einstückig mit dem jeweiligen Gummibandförderer ausgebildet, um hier möglicherweise störungsanfällige Verbindungsstellen zu vermeiden.

Der Querschnitt der Abstützungsvorsprünge kann relativ frei gewählt werden. Besonders bevorzugt ist jedoch ein Trapezquerschnitt mit der längeren Trapez-Grundseite am Übergang zur rückseitigen Flachseite des jeweiligen Gummibandförderers, da dieser Querschnitt die Vorteile eines besonders großflächigen Übergangs in die rückseitige Flachseite des jeweiligen Gummibandförderers und einer gewissen Zentrierwirkung bietet.

Vorzugsweise ist bei jedem der beiden Gummibandförderer eine umlenkende Rolle als, vorzugsweise gummierte, Antriebsrolle vorgesehen, so daß er durch eine mit mindestens 180° umschlungene Antriebsrolle praktisch schlupffrei antreibbar ist. Zusätzlich kann man in der Nähe der Antriebsrolle eine Einschnürrolle vorsehen, die mit der vorderen Betriebsflachseite des jeweiligen Gummibandförderers zusammenwirkt und den Gummibandförderer über etwas mehr als 180° angepreßt an die Antriebsrolle hält. Die Einschnürrolle kann auch nachstellbar oder federbelastet sein, um den jeweiligen Gummibandförderer auf der gewünschten Vorspannung zu halten. Die Antriebsrollen sind mit Ringnuten für die Abstützungsvorsprünge versehen, um das Antriebsdrehmoment praktisch über ihre gesamte Länge auf dem jeweiligen Gummibandförderer übertragen zu können. Am anderen Ende des Restrainers, an dem keine Antriebsrollen vorgesehen sind, ist vorzugsweise jeweils eine umlenkende Rolle vorgesehen, die als Spannrolle, beispielsweise nachstellbar oder federbelastet ausgebildet ist.

Vorzugsweise weisen die Gummibandförderer auf der vorderen Betriebsflachseite jeweils eine Fischgrätprofilierung auf, deren mittige Spitze entgegen der Förderrichtung weist. Dies fördert die schlupffreie oder zumindest schlupfarme Förderung der Schlachttiere mittels des Restrainers, ohne daß eine Einklemmgefahr wie bei Gliederbändern bestünde.

Die Abstützungsrollen sind alle oder teilweise mit einer oder mehreren Ringnuten versehen. Die Zahl der Abstützungsrollen richtet sich nach der Belastung des Restrainers senkrecht zur Gummibandebene und quer dazu in Absenkrichtung.

Die beiden Gummibandförderer bestehen vorzugsweise nicht rein aus Gummi, sondern sind ingeeigneter Weise armiert bzw. mit geeigneten, eingebetteten, flexiblen Festigkeitsträgern versehen. Ob die Armierung bzw. die Festigkeitsträger bis in die Abstützungsvorsprünge reichen oder nicht, richtet sich nach der Belastung des Restrainers.

Der erfindungsgemäße Restrainer dient vorzugsweise zum Halten und Weiterbewegen von vergleichsweise kleineren bzw. leichteren Schlachttieren, wie Schweinen, Schafen, Ziegen o.dgl. bei deren Betäuben.

Ferner kann bei jedem der beiden Gummibandförderer mindestens eine Gleitleiste vorgesehen sein. Wenn längs des fördernden Trums mehrere Rollen vorgesehen sind, kann die Gleitleiste in Abschnitte unterteilt sein, die zwischen den Rollen angeordnet sind. Besonders günstig ist die Gleitleiste am unteren Rand des jeweiligen Gummibandförderers. Günstig ist ferner eine leichte Zurückversetzung gegenüber der Rückseite des Gummibandförderers in dessen unausgelenkter Normallage, damit die Förderer nur bei stärkerer Auslenkung an der Gleitleiste anstreift.

Die Erfindung und Weiterbildungen der Erfindung werden im folgenden anhand eines bevorzugten Ausführungsbeispiels noch näher erläutert. Es zeigen:

Fig. 1      eine Stirnansicht der Austrittsseite des Restrainers;

Fig. 2      eine Ansicht der Austrittsseite des Restrainers von unten.

In den Zeichnungen erkennt man zwei Gummibandförderer 2, die jeweils als Endlosförderer ausgebildet sind. Die beiden Gummibandförderer 2 umschlingen jeweils am Austrittsende des Restrainers eine Antriebsrolle 4 und auf der nicht gezeichneten Eintrittsseite des Restrainers eine geometrisch gleiche Spannrolle, so daß jeweils ein förderndes Trum 6 und ein leerlaufendes Trum 8 gebildet werden. Die beiden fördernden Trums 6 sind mit ihren Oberkanten und ihren Unterkanten parallel zueinander und bilden zwischen sich den Aufnahmeraum 10 für die nicht eingezeichneten Schlachttiere. Nahe der zugeordneten Antriebsrolle 4 ist jeweils eine Einschnürrolle 12 vorgesehen, die mit der vorderen Betriebsflachseite 14 des zugeordneten Gummibandförderers 2 zusammenwirkt und eine Umschlingung der jeweiligen Antriebsrolle 4 um etwas mehr als 180° unter Anpressung erzwingt. Jede der Einschnürrollen 12 ist am oberen und am unteren Ende mit einem Bordkranz 16 ausgestattet, der den jeweiligen Gummibandförderer 2 zusätzlich führt. In der Nähe der nicht gezeichneten Spannrolle an der Eintrittsseite des Restrainers kann ebenfalls jeweils eine Einschnürrolle vorgesehen sein. Die vordere Flachseite bzw. Betriebsflachseite 14 des jeweiligen Gummibandförderers 2 weist also am fördernden Trum 6 bzw. am Aufnahmeraum 10 nach innen und am leerlaufenden Trum 8 nach außen, während die Rückseite 18 des jeweiligen Förderbands immer in den Raum zwischen den Trums 6 und 8 weist.

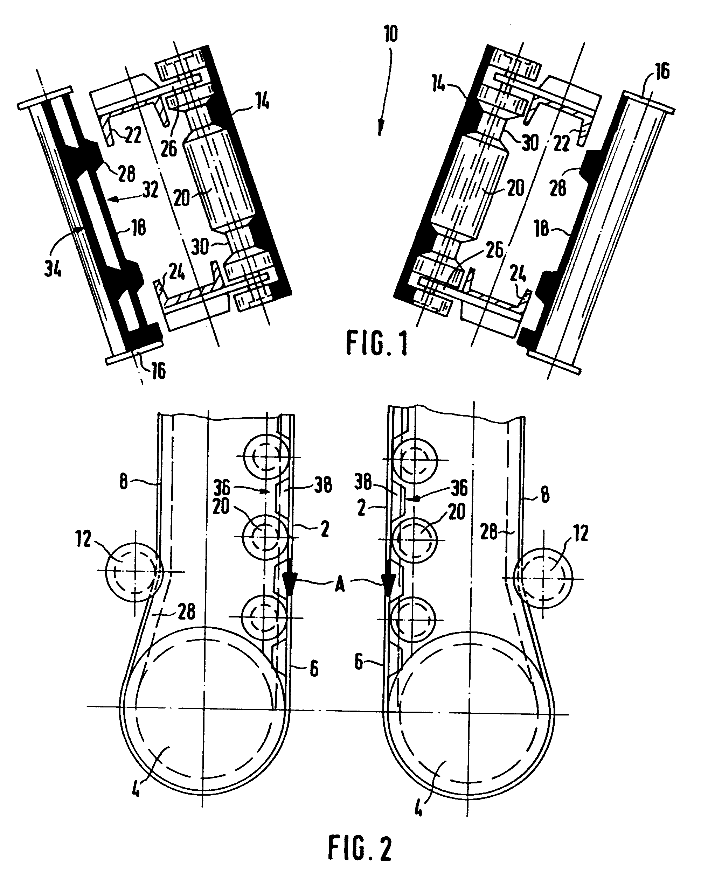

Zwischen der jeweiligen Antriebsrolle 4 und der jeweiligen, nicht gezeichneten, geometrisch entsprechenden Spannrolle ist bei jedem Gummibandförderer 2 eine Reihe von Abstützungsrollen 20 vorgesehen derart, daß das fördernde Trum 6 des jeweiligen Gummiförderbands 2 zwischen der Antriebsrolle 4 und der nicht gezeichneten Spannrolle längs einer Ebene läuft. Die Achsen sämtlicher Rollen des in Fig. 1 links gezeichneten Förderers und die Achsen sämtlicher Rollen des in Fig. 1 rechts gezeichneten Förderers sind derart schräg gestellt, daß sich ein nach oben verbreitender Aufnahmeraum 10 und eine zur Längsmittelebene symmetrische Anordnung ergibt. Oder mit anderen Worten, die Unterkanten der beiden fördernden Trums 6 haben einen geringeren, aber noch vorhandenen, Abstand voneinander als die oberen Kanten.

Zur Lagerung der Abstützungsrollen 20 dienen für jede Restrainerseite ein oberer Längsträger 22 und ein unterer Längsträger 24, jeweils mit U-Profil, wobei jeweils der obere Längsträger 22 nach unten innen und der untere Längsträger 24 nach oben außen offen ist. An den Längsträgern 22, 24 sind für jede Abstützungsrolle 20 Konsolen 26 angebracht. Die Abstützungsrollen 20 können in Axialrichtung geteilt ausgebildet sein, um sie besser jeweils zwischen der unteren und der oberen Konsole 26 montieren zu können. Die Abstützungsrollen 20 sind an den Konsolen 26 drehbar gelagert.

Die Gummibandförderer 2 haben jeweils einen Querschnitt in Gestalt eines sehr flachen Rechtecks mit zwei trapezförmigen, längs des jeweiligen Gummibandförderers 2 verlaufenden Abstützungsvorsprüngen 28 auf der Rückseite, wobei die längere Grundseite des Trapezes am Übergang in die rückseitige Flachseite 18 des jeweiligen Gummibandförderers 2 vorgesehen ist. Die Antriebsrolle 4, die nicht gezeichnete Spannrolle sowie, beim beschriebenen Ausführungsbeispiel, sämtliche Abstützungsrollen 20 haben jeweils zwei äußere Ringnuten 30 in ihren Umfangsflächen. Der gegenseitige Mittelabstand der beiden Abstützungsvorsprünge 28 jedes Gummibandförderers 2 beträgt etwa die Hälfte der Gesamtbreite des Gummibandförderers 2, so daß der obere Abstützungvorsprung 28 und der untere Abstützungsvorsprung 28 jeweils etwa in einem Abstand von einem Viertel der Breite des Gummibandförderers 2 von dessen oberen bzw. unterem Rand entfernt sind. Die Abstützungsvorsprünge 28 und die Ringnuten 30 sind komplementär zueinander gestaltet. Die Abstützungsrollen 20 haben eine Länge, die praktisch genau der Gesamtbreite des jeweiligen Gummibandförderers 2 entspricht. Die Umfänge der beiden Antriebsrollen 4 sind gummiert.

In Fig. 1 links ist sowohl die Position 32 des leerlaufenden Trums als auch die Position 34 des dortigen Gummibandförderers 2 aufliegend auf der Antriebsrolle 4 eingezeichnet. Die Einschnürrolle 12 drückt in Position 32 auf den Gummibandförderer 2.

Die beiden Antriebsrollen 4 sind mit geeigneten Antrieben, üblicherweise Elektromotoren mit Getrieben, gekoppelt, damit den beiden Gummibandförderern 2 eine synchrone, vorzugsweise einstellbare, Fördergeschwindigkeit derart, daß die beiden fördernden Trums 6 in gleicher Richtung laufen, erteilt werden kann.

Die vorderen Flachseiten 14 bzw. Betriebsflachseiten der beiden Gummibandförderer 2 sind mit einer nicht eingezeichneten Fischgrätprofilierung versehen. Diese besteht aus schräg gestellten Gummivorsprüngen relativ geringer Höhe, die, gesehen auf die Betriebsflachseite 14, in der oberen Hälfte der Betriebsflachseite 14 sowie in der unteren Hälfte der Betriebsflachseite 14 nach schräg rückwärts entgegen der Förderrichtung A der Gummibandförderer 2 verlaufen, so daß sozusagen die Pfeilung der Fischgrätprofilierung entgegen der Förderrichtung A weist.

In Fig. 2 erkennt man ferner jeweils eine Gleitleiste 36 aus Kunststoff, die beim fördernden Trum 6 jedes Gummibandförderers 2 rückseitig an dessen unterem Rand vorgesehen ist. Die beiden Gleitleisten 36 sind jeweils in mehrere Abschnitte 38 unterteilt, die zwischen den Abstützungsrollen 20 und an den Enden zwischen der ersten Stützrolle 20 und der Spannrolle sowie zwischen der letzten Stützrolle 20 und der Antriebsrolle 4 angeordnet sind. Die Gleitleistenabschnitte 38 sind gegenüber der Ebene, die die Rückseite 18 des jeweiligen Gummibandförderers 2 im voll gestrafften Zustand zwischen den Rollen 4, 20 bzw. 20, 20 bildet, geringfügig zurückversetzt, damit der jeweilige Gummibandförderer 2 nur bei größerer Auslenkung mit den Gleitleistenabschnitten 38 in Kontakt kommt, wodurch das Entstehen zusätzlicher Reibung minimiert wird. Die Gleitleiste 36 verhindert zum einen eine übermäßige Auslenkung des fördernden Trums 6 des jeweiligen Gummibandförderers 2 und verhindert zum anderen, daß etwa die Beine von im Restrainer befindlichen Schlachttieren um die unteren Ränder der Gummibandförderer 2 herum in die Spalte zwischen der Rückseite 18 und den Rollen 4 oder 2 gezogen werden.

Die Betäubung der Schlachttiere findet in der Regel im gezeichneten Endbereich des Restrainers statt, beispielsweise mit Hilfe elektrischer Handbetäubungszangen oder auch in automatischer Weise durch von oben in den Aufnahmeraum ragende Elektroden, die von den Schlachttieren passiert werden.

Die Breite der Gummibandförderer 2 beträgt beispielsweise etwa 55 bis 80 cm. Die Länge des Restrainers beträgt beispielsweise etwa 10 bis 20 m. Ein typischer Außendurchmesser der Stützrollen 20 ist 12 cm, und ein typischer Achsabstand der Stützrollen 20 ist 20 cm.

Die Ausbildung des Restrainers mit Gummibandförderern 2 hat den Vorteil, daß sich nicht zwischen Gliedern Schmutz festsetzen kann, der gerade bei den rauhen Betriebsbedingungen in Schlachthöfen auf die Dauer zu Beschädigungen, Spreizerscheinungen und übermäßigem Verschleiß der Glieder bzw. Gliedergelenke führen kann.

**Patentansprüche**

1. Restrainer zum Halten und Weiterbewegen von Schlachttieren, insbesondere Schweinen, mit einem Paar von im Querschnitt V-förmig angeordneten, synchron bewegbaren endlosen Gummibandförderern (2), die an den einander zugewandten Seiten jeweils ein förderndes Trum (6) aufweisen und die jeweils mit mindestens einem längs verlaufenden Abstützungsvorsprung (28) an der Rückseite (18) ausgebildet sind, und mit einer rotierbaren Antriebsrolle (4) am Austrittsende des Restrainers sowie einer rotierbaren Umlenkrolle am Eintrittsende des Restrainers für jeden der Gummibandförderer (2), wobei die Antriebsrollen (4) und die Umlenkrollen zur absenkungsverhindernden Abstützung der Gummibandförderer (2) mit mindestens einer Ringnut (30) am Umfang versehen sind, in die der jeweilige Abstützungsvorsprung (28) formschlüssig eingreift, dadurch gekennzeichnet, daß bei beiden Gummibandförderern (2) des zur Betäubung von Schlachttieren vorgesehenen Restrainers jeweils zwischen der Umlenkrolle und der Antriebsrolle (4) eine Reihe von Abstützungsrollen (20) längs des fördernden Trums (6) vorgesehen ist, die alle oder zum Teil mit mindestens einer Ringnut (30) am Umfang versehen sind.

2. Restrainer nach Anspruch 1, dadurch gekennzeichnet, daß der Abstützungsvorsprung (28) einstückig mit dem Gummibandförderer (2) ausgebildet ist.

3. Restrainer nach Anspruch 1 oder 2, dadurch gekennzeichnet, daß der Abstützungsvorsprung (28) einen Trapezquerschnitt hat.

4. Restrainer nach einem der Ansprüche 1 bis 3, dadurch gekennzeichnet, daß jeder Gummibandförderer (2) zwei beabstandete Abstützungsvorsprünge (28) und die betreffenden Rollen (4; 20) jeweils zwei beabstandete Ringnuten (30) aufweisen.

5. Restrainer nach einem der Ansprüche 1 bis 4, dadurch gekennzeichnet, daß die Antriebsrollen (4) gummiert sind.

6. Restrainer nach einem der Ansprüche 1 bis 5, dadurch gekennzeichnet, daß die Gummibandförderer (2) auf der Betriebsflachseite (14) jeweils eine Fischgrätprofilierung aufweisen.

7. Restrainer nach einem der Ansprüche 1 bis 6, gekennzeichnet durch jeweils mindestens eine Gleitleiste (36) für die fördernden Trums (6) der Gummibandförderer (2), die - vorzugsweise abschnittsweise - zwischen den Rollen (20) der Rollenreihe vorgesehen ist.

8. Restrainer nach Anspruch 7, dadurch gekennzeichnet, daß die Gleitleisten (36) gegenüber der Normallage der Gummibandförderer (2) zurückgesetzt sind.

9. Restrainer nach Anspruch 7 oder 8, dadurch gekennzeichnet, daß die Gleitleisten (36) für den unteren Rand der Gummibandförderer (2) vorgesehen sind.

**Claims**

1. A restrainer for holding and conveying animals to be slaughtered, in particular pigs, comprising a pair of synchronously movable endless rubber belt conveyors (2) arranged in V-shaped manner as seen in cross-section and each having at their facing sides a conveying run (6) and each being formed on their back sides with at least one longitudinally extending supporting projection (28), and comprising a rotatable driving roller (4) at the exit end of the restrainer and a rotatable deflection roller at the entry end of the restrainer for each rubber belt conveyor (2), the driving rollers (4) and the deflection rollers, for supporting the rubber belt conveyors (2) in lowering-prohibiting manner, being formed on their circumference with at least one annular groove (30) in which the respective supporting projection (28) engages in positive manner,

characterized in that both rubber belt conveyors (2) of the restrainer for stunning animals to be slaughtered are each provided between the deflection roller and the driving roller (4) with a row of supporting rollers (20) along the conveying run (6) which are all or in part formed with at least one annular groove (30) in the circumference.

2. A restrainer according to claim 1,
characterized in that the supporting projection (28) is formed integrally with the rubber belt conveyor (2).

3. A restrainer according to claim 1 or 2,
characterized in that the supporting projection (28) is of trapezoidal cross-section.

4. A restrainer according to any one of claim 1 to 3,
characterized in that each rubber belt conveyor (2) has two spaced apart supporting projections (28) and the related rollers (4; 20) each have two spaced apart annular grooves (30).

5. A restrainer according to any one of claims 1 to 4,
characterized in that the driving rollers (4) are rubber-coated.

6. A restrainer according to any one of claims 1 to 5,
characterized in that the rubber belt conveyors (2) each have a herringbone profile on the operational face side (14).

7. A restrainer according to any one of claims 1 to 6,
characterized by at least one slide rail (36) for each of the conveying runs (6) of the rubber belt conveyors (2) which are provided - preferably in sections - between the rollers (20) of the row of rollers.

8. A restrainer according to claim 7,
characterized in that the slide rails (36) are set back from the normal position of the rubber belt conveyors (2).

9. A restrainer according to claim 7 or 8,
characterized in that the slide rails (36) are provided for the lower edge of the rubber belt conveyors (2).

**Revendications**

1. Rétenteur, pour arrêter et continuer l'acheminement des animaux á abattre, en particulier de porcs, avec un couple de transporteurs continus à bande en caoutchouc (2), disposés en formant une section transversale en V, susceptibles d'être déplacés de façon synchrone, qui présentent chacun, sur les faces tournées l'une vers l'autre, un tronçon moteur (6) et réalisés chacun avec, en face arrière (18), au moins une saillie d'appui (28) qui s'étend longitudinalement, et avec un rouleau d'entraînement (4) susceptible de tourner, placé à l'extrémité de sortie du rétenteur, ainsi qu'un rouleau de renvoi susceptible de tourné, placé à l'extrémité d'entrée du rétenteur, pour chacun des transporteurs à bande en caoutchouc (2), les rouleaux d'entraînement (4) et les rouleaux de renvoi, servant à donner aux transporteurs à bande en caoutchouc (2) un appui les empêchant de tomber, étant pourvus en périphérie d'au moins une gorgè annulaire (30), dans laquelle s'introduit avec ajustement de forme la saillie d'appui (28) respective,

caractérisé en ce que

dans le cas de deux transporteurs à bande en caoutchouc (2) du rétenteur prévu pour anesthésier des animaux á abattre, est prévue chaque fois entre le rouleau de renvoi et le rouleau d'entraînement (4) une série de rouleaux d'appui (20), le long du tronçon moteur (6), qui sont tous en partie pourvus d'au moins une gorge annulaire (30) en périphérie.

2. Rétenteur selon la revendication 1, caractérisé en ce que la saillie d'appui (28) est réalisée d'un seul tenant avec le transporteur à bande en caoutchouc (2).

3. Rétenteur selon la revendication 1 ou 2, caractérisé en ce que la saillie d'appui (28) présente une section transversale trapézoïdale.

4. Rétenteur selon l'une des revendications 1 à 3, caractérisé en ce que chaque transporteur à bande en caoutchouc (2) présente deux saillies d'appui (28) et les rouleaux concernés (4;20) présentent chacun deux gorges annulaires (30) espacées l'une de l'autre.

5. Rétenteur selon l'une des revendications 1 à 4, caractérisé en ce que les rouleaux d'entraînement (4) sont caoutchoutés.

6. Rétenteur selon l'une des revendications 1 à 5, caractérisé en ce que les transporteurs à bande en caoutchouc (2) présentent chacun sur la face plate fonctionnelle (14) un profilage en arêtes de poisson.

7. Rétenteur selon l'une des revendications 1 à 6, caractérisé par chaque fois au moins une bande de glissement (36) pour le tronçon moteur (6) des transporteurs à bande en caoutchouc (2), qui est prévue - de préférence en partie - entre les rouleaux (20) de la série de rouleaux.

8. Rétenteur selon la revendication 8, caractérisé en ce que les bandes de glissement (36) sont en retrait par rapport à la position normale des transporteurs à bande en caoutchouc (2).

9. Rétenteur selon la revendication 7 ou 8, caractérisé en ce que les bandes de glissement (36) sont prévues pour la bordure inférieure des transporteurs à bande en caoutchouc (2).

FIG. 1

FIG. 2